# EUROPEAN PATENT APPLICATION

(11) **EP 2 466 260 A1**
(43) Date of publication of application: **20.06.2012**
(21) Application number: 10195497.2
(22) Date of filing: 16.12.2010
(51) Int. Cl.: G01C 21/36

(54) **Changing frequency of navigational notifications based on familiarity of a user with a route**

(71) Applicant: Research In Motion Limited, Waterloo, ON N2L 3W8 (CA)
(72) Inventor: Arastafar, Martin, Waterloo Ontario N2L 3L3 (CA)
(74) Representative: Patel, Binesh

(57) **Abstract**

A navigation-enabled mobile device has a memory operatively coupled to a processor for executing a navigation application, a speaker operatively coupled to the processor for providing navigational notifications, and a position-determining system for determining a current location to enable the processor to identify a current route on which the mobile device is located and to identify one or more paths contained within the route. The processor is configured to determine whether the one or more paths are familiar or unfamiliar and to determine a frequency of the navigational notifications based on whether the paths are familiar or unfamiliar.

## Description

### TECHNICAL FIELD

The present disclosure relates to navigation techniques and mobile devices having navigation capabilities and, in particular, to the navigational notifications provided by such devices.

### BACKGROUND

Dedicated Global Positioning System ("GPS") navigation units and GPS-enabled mobile devices that run navigation applications are increasingly popular. These devices typically have a display screen and a speaker for providing visual and audible navigation instructions (also referred to herein as navigational notifications). These instructions or navigational notifications inform the user of approaching turns, intersections, exits, points of interest, or other map features of relevance or interest to the user of the mobile device. For example, a highlighted path and/or directional arrow may indicate visually where the user is to turn. Typically, accompanying this visual cue is an audible navigational notification (text-to-speech message) that also alerts the user of the upcoming turn such as, for example, "Turn right in 100 metres onto Columbia Street". This audible navigational notification is delivered a predetermined distance or time before the mobile device is due to arrive at the intersection to allow sufficient time for the user to react safely to the instruction. Most devices also repeat the navigational notification as the mobile device reaches the intersection, e.g. "Turn right now onto Columbia Street".

On conventional navigation devices, the frequency of these navigational notifications may be changed in the user settings. Thus, the user may manually increase or decrease the frequency with which these navigational notifications are provided. The user settings may also permit the audible navigational notifications to be disabled altogether.

Accordingly, there is a need to provide an improved method and device for controlling the frequency of navigational notifications.

### BRIEF DESCRIPTION OF THE DRAWINGS

Further features and advantages of the present disclosure will become apparent from the following detailed description, taken in combination with the appended drawings, in which:

FIG. 1a is a schematic depiction of a mobile device according to the present disclosure;

FIG. 1b is a schematic depiction of a wireless network in which the mobile device of FIG. 1a is operating;

FIG. 2a is a flowchart depicting steps of a method of providing navigational notifications in accordance with an aspect of the present disclosure;

FIG. 2b is another flowchart depicting steps of a related method of providing navigational notifications in accordance with an aspect of the present disclosure;

FIG. 3 is a flowchart depicting additional optional steps of the method of FIG. 2;

FIG. 4 depicts an example of a road map in which certain paths are classified as familiar and others classified as unfamiliar for the purposes of illustrating an example of how the present disclosure is used to vary the frequency of navigational notifications;

FIG. 5 depicts an example of a city map in which certain neighbourhoods are classified as familiar and others classified as unfamiliar for the purposes of illustrating another way in which the present disclosure is used to vary the frequency of navigational notifications;

FIG. 6 depicts an example of a navigation application executing on a mobile device traveling along a familiar path in which case the mobile device provides, by way of example, two navigational notifications (one advance notification of an upcoming turn followed by a final notification to make the turn), wherein the figure depicts the delivery of the advance notification;

FIG. 7 depicts an example of a navigation application executing on a mobile device traveling along a familiar path in which case the mobile device provides, by way of example, two navigational notifications (one advance notification of an upcoming turn followed by a final notification to make the turn), wherein the figure depicts the delivery of the final notification;

FIG. 8 depicts an example of a navigation application executing on a mobile device traveling along an unfamiliar path in which case the mobile device provides, by way of example, three navigational notifications (first and second advance notifications of an upcoming turn followed by a final notification to make the turn), wherein the figure depicts the delivery of the first advance notification;

FIG. 9 depicts an example of a navigation application executing on a mobile device traveling along an unfamiliar path in which case the mobile device provides, by way of example, three navigational notifications (first and second advance notifications of an upcoming turn followed by a final notification to make the turn), wherein the figure depicts the delivery of the second advance notification;

FIG. 10 depicts an example of a navigation application executing on a mobile device traveling along an unfamiliar path in which case the mobile device provides, by way of example, three navigational notifications (first and second advance notifications of an upcoming turn followed by a final notification to make the turn), wherein the figure depicts the delivery of the final notification; and

FIG. 11 depicts a setting and preference page (or menu) in the navigation application that enables the user to configure the manner in which the frequency of navigational notifications is varied.

It will be noted that throughout the appended drawings, like features are identified by like reference numerals.

### DETAILED DESCRIPTION

One drawback of the conventional technology introduced above is that the frequency of the navigational notifications can only be changed by reconfiguring the user settings. This requires that the user enter the settings menu, locate the notification setting, and make the desired adjustment. Because of the complexity of this manual adjustment procedure, it is not feasible for a driver to do so while driving. Thus, once underway, it is not practical for the driver to modify the frequency of the navigational notifications. Instead, the driver must remember to make this adjustment prior to traveling, or he must pull over to make the change, both of which are highly inconvenient. Moreover, if the driver does not know with certainty which route he will take, he will not necessarily know ahead of time whether he will require more frequent or less frequent navigational notifications. Another drawback of the conventional technology is that the frequency of the notification is applicable to all routes, irrespective of the driver's familiarity with a particular route.

In general, the present disclosure pertains to a technique for automatically varying the frequency with which a navigation device provides navigational notifications. The mobile device varies the frequency of navigational notifications based on whether the current path over which the mobile device is traveling is a familiar path to the user of the mobile device. Where the mobile device infers that the current path is a familiar path, the frequency of the navigational notifications for the path is diminished. Where the mobile device infers that the current path is not a familiar path, the frequency of the navigational notifications is increased. In some implementations, the mobile device furthermore takes into account other factors, such as weather data, road condition data, and/or traffic data to further adjust the frequency of these navigational notifications.

Thus, a main aspect of the present disclosure is a method of providing navigational notifications. The method entails identifying a current route, identifying one or more paths within the current route, determining whether the one or more paths are familiar or unfamiliar, and determining a frequency of the navigational notifications for each path within the current route based on whether the one or more paths are familiar or unfamiliar.

Another main aspect of the present technology is a computer readable medium (or machine readable medium) comprising instructions in code which when loaded into memory and executed on a processor of a navigation-enabled device, such as a GPS-enabled mobile device or a dedicated GPS navigation unit, causes the steps of the foregoing method to be performed.

Yet another main aspect of the present technology is a navigation-enabled device or GPS-enabled device (e.g. GPS-enabled mobile device, dedicated GPS navigation unit, or equivalent) that has a memory operatively coupled to a processor for executing a navigation application, a speaker operatively coupled to the processor for providing navigational notifications, and a position-determining system for determining a current location to enable the processor to identify a current route on which the mobile device is located and to identify one or more paths within the route. The processor is configured to determine whether the one or more paths are familiar or unfamiliar. The processor is further configured to determine a frequency of the navigational notifications for each path based on whether the path is a familiar or unfamiliar. It should be noted that the determination of the navigational notification frequency may also be performed prior to embarking on a new route. For example, the navigational notification frequency can be determined once the user selects a destination, thereby defining a new current route over the which the mobile device is to travel. As such, the expression "identifying a current route" may entail determining a route over which the mobile device is presently traveling using location-determining techniques (where the device has no pre-programmed route) or it may entail receiving starting point and destination information that programs or defines a route to be taken.

The details and particulars of these aspects of the technology will now be described below, by way of example, with reference to the attached drawings.

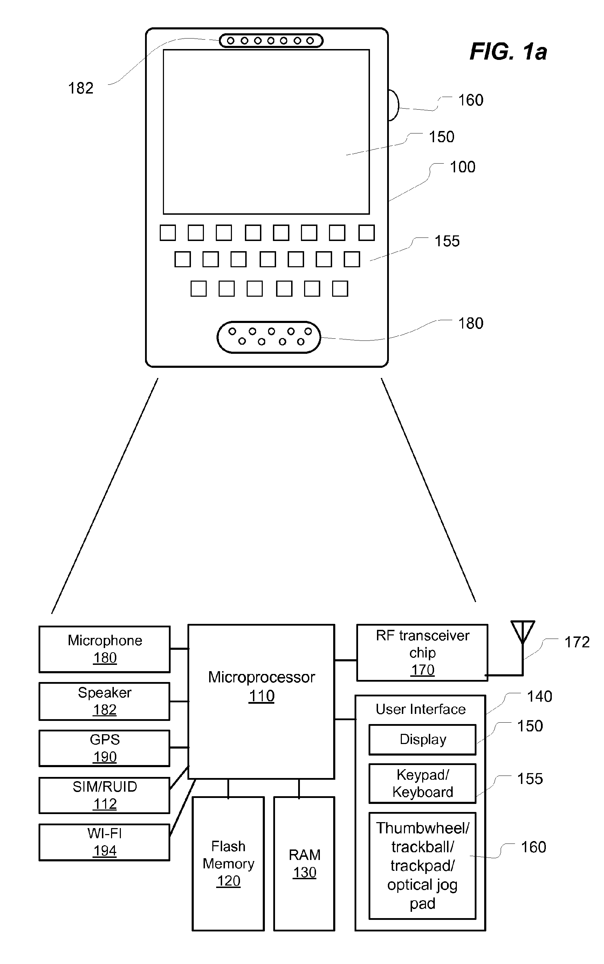

FIG. 1a is a schematic depiction of a mobile device 100 as one example of an electronic device on which the present disclosure can be implemented. The term "electronic device" is meant to encompass a broad range of wireless communications devices or other navigation-enabled portable electronic devices such as, for example, smart phones, cell phones, satellite phones, wireless-enabled personal digital assistants (PDAs), watches, wireless-enabled computing tablets, wireless-enabled laptops or netbooks, in-dash built-in GPS units, handheld or portable GPS devices, portable gaming devices, etc.

As shown schematically in FIG. 1a, the mobile device 100 includes a microprocessor (referred to herein as a "processor") 110 operatively coupled to memory (Flash Memory 120 and/or RAM 130). The processor 110 and memory 120 or 130 cooperate to execute a navigation application on the mobile device 100. The mobile device 100 may include a SIM card 112, RUID card or equivalent. The mobile device 100 has a user interface 140 which includes a display (e.g. an LCD screen) 150, for displaying information such as maps for navigation. The mobile device 100 further includes a keyboard (or keypad) 155, for inputting information such as entering destination information into the navigation application. A thumbwheel (or trackball or track pad or optical jog pad) 160 may optionally be provided as part of the user interface. Alternatively, the user interface 140 may include a touch screen in lieu of a keyboard. The mobile device 100 includes a radiofrequency (RF) transceiver chipset 170 for wirelessly transmitting and receiving data and voice communications, e.g. via a cellular network. Wireless communications may be performed using CDMA, GSM, LTE, or any other suitable communications standard or protocol. A microphone 180 and speaker 182 (and/or jack for earphones) are provided for voice communications. The speaker 182 also serves to provide audible navigation instructions (or navigational notifications) for the navigation application.

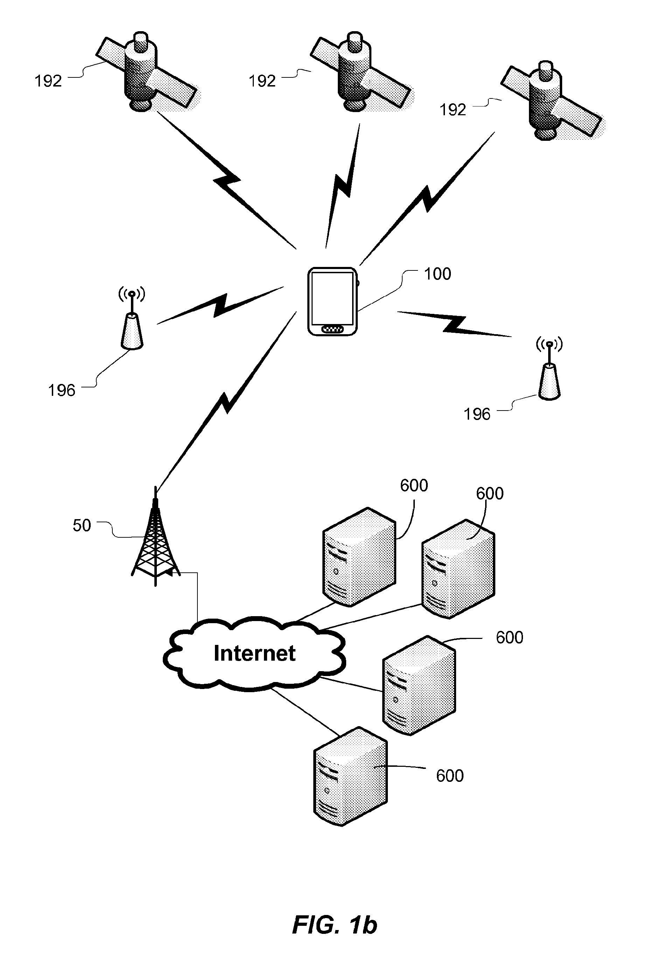

As further depicted in FIG. 1a, the mobile device 100 includes a GPS chipset 190 (or other position-determining subsystem) to determine the current location of the mobile device 100 from radiofrequency signals emitted by a plurality of orbiting GPS satellites 192 depicted in FIG 1b. The GPS chipset 190 (or other position-determining subsystem) provides location and speed data to the navigation application using techniques that are well known in the art.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

References herein to "GPS" are meant to include Assisted GPS and Aided GPS.

Other position-determining techniques or subsystems may be used as well, e.g. a radiolocation subsystem that determines its current location using radiolocation techniques, as will be elaborated below. In other words, the location of the mobile device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system.

Another positioning technique that may be utilized is WPS (Wi-Fi Positioning System). WPS may be used if the mobile device 100 includes a Wi-Fi transceiver 194 (shown in FIG. 1a) for communicating with a Wi-Fi station 196 (shown in FIG. 1b).

To summarize, the mobile device 100 has its memory 120, 130 operatively coupled to its processor 110 for executing a navigation application. The speaker 182 is also operatively coupled to the processor 110 to provide audible navigational notifications. The GPS receiver 190 (or other position-determining subsystem) determines a current location of the mobile device 100 to enable the processor 110 to identify a current route on which the mobile device 100 is located. The processor 110 is configured to determine whether the current route contains familiar or unfamiliar paths. The processor 110 is configured to vary a frequency of the navigational notifications for each path based on whether the particular path is a familiar path or an unfamiliar path. If the path is a familiar path, the frequency of navigational notifications for that path (i.e. that segment of the route) is decreased. Conversely, if the path is an unfamiliar path, the frequency of navigational notifications is increased. Therefore, for a given route, there may be paths that are both familiar and unfamiliar. For example, consider a user who habitually drives between Montreal and Toronto. If the user travels to Waterloo from Montreal, the route then includes an additional path (from Toronto to Waterloo). In this example, only the Montreal-Toronto path(s) would be familiar to the user. The additional path between Toronto and Waterloo would be an unfamiliar path to the user. It should also be noted that, in a simple case, the route may consist of only one single path. Familiarity with a path may be understood as meaning that the user has, by virtue of prior experience or learning, knowledge of the path and thus would require less navigational guidance as compared with a path over which the user has never before traveled.

In one example implementation, the radiofrequency transceiver 170 receives data such as weather data, road condition data and/or traffic data. This data may be delivered in real-time over the air by base station 50 (shown by way of example in FIG. 1b). This data may be provided synchronously or asynchronously by remote servers (e.g. web servers 600 shown by way of example in FIG. 1b) or shared by other (nearby) mobile devices. This additional data may be used to refine (or further adjust) the navigational notification frequency. For example, if the weather and/or road conditions are poor, the frequency of navigational notifications may be increased. Likewise, if traffic data suggests that there is heavy but fast-moving traffic, the frequency of navigational notifications may be increased. Other received data that may be used to modify the navigational notification frequency include time of day (whether it is daytime or night-time) and any historical accident/collision data for a given route segment.

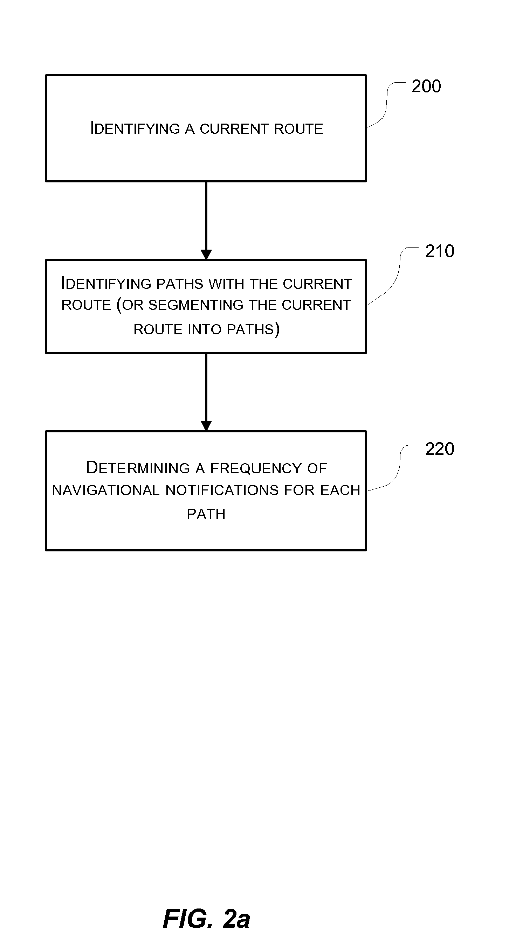

Another aspect of the present disclosure is a method of providing navigational notifications. Main steps of this method are depicted in the flowchart shown in FIG. 2a. The method entails a step 200 of identifying a current route. A subsequent step 210 of this method involves identifying paths within the current route (or segmenting the current route into paths). Once the paths that constitute a route are identified, each path may be analyzed to assess whether any one of the paths along the route is a familiar path. In other words, the method involves determining whether the current route contains one or more familiar paths. Path familiarity can be determined in many different ways such as, for example, by determining how often a given path is taken in a period of time, how long ago the path was taken, and whether the path was taken at a time of the day conducive to remembering the attributes of the path (e.g. if the path was traversed at night or in conditions of poor visibility, then it might not be familiar even if it was traveled repeatedly). Once the determination is made as to the familiarity of the paths that constitute the route, a frequency of the navigational notifications is determined (step 220) for each path along the current route based on whether each path along the current route is a familiar path or not.

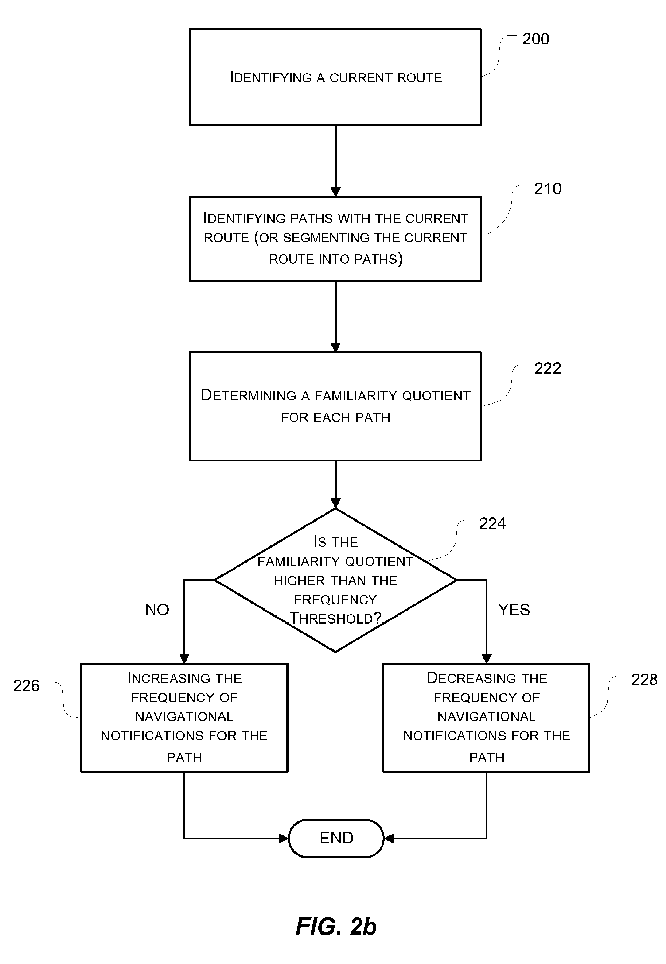

FIG. 2b depicts a related method that, like the method depicted in FIG. 2a, involves the step 200 of identifying a current route and the step 210 of identifying paths within the current route (or segmenting the current route into paths). At step 222, the method involves determining a familiarity quotient for each path along the route. A decision 224 is made as to whether the familiarity quotient exceeds a frequency threshold. If the path is unfamiliar, the frequency of navigational notifications for the path is increased (step 226). If the path is familiar, the frequency of navigational notifications for the path is decreased (step 228).

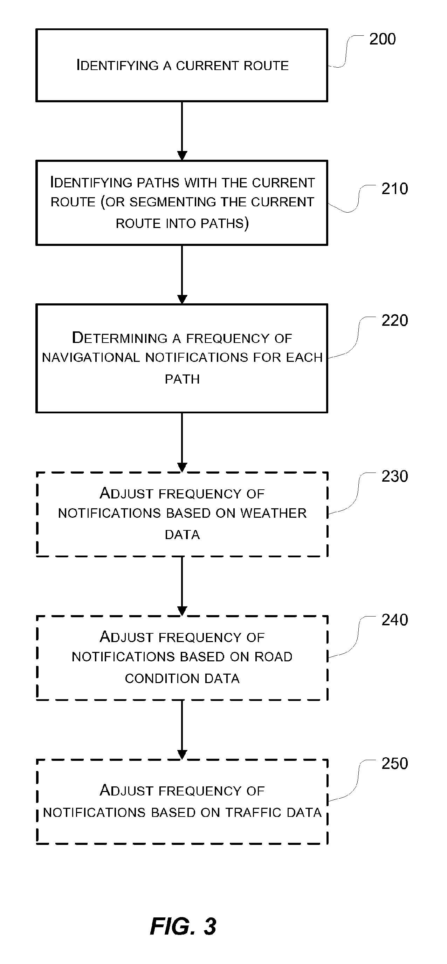

In a variant of this method, other factors such as weather, road conditions and traffic may be used to further adjust the frequency of the navigational notifications. FIG. 3 depicts a flowchart in which further optional steps 230, 240 and 250 may be performed. For example, at optional step 230, the frequency of the navigational notifications may be further adjusted based on weather data received by the mobile device. As another example, at optional step 240, the frequency of the navigational notifications may be further adjusted based on road condition data received by the mobile device. As yet a further example, at optional step 250, the frequency of the navigational notifications may be further adjusted based on traffic data received by the mobile device. As will be appreciated, all or a subset of these factors (weather, road conditions and traffic) may optionally be used to further adjust the frequency of the navigational notifications.

In another example implementation of this method, the frequency of the navigational notifications may be further adjusted or overridden by a voice command or other user input. For example, the method may entail receiving a voice command and then adjusting the frequency of the navigational notifications based on the voice command. This feature advantageously allows the user to override the automatic variation of the notification frequency, for example in a case where he is traveling with a companion who knows the route very well.

In another example implementation of this method, the step of determining whether the current route is a familiar path comprises a prior step of learning travel patterns. Learning travel patterns enables the mobile device to remember which routes the mobile device has frequently taken. For example, the mobile device would quickly learn a route from home to work. This route would be classified as familiar. Subsequent travel over that route would result in the mobile device decreasing the frequency of navigational notifications.

In one specific implementation, learning travel patterns may involve storing a list of routes or paths (i.e. route segments) over which the mobile device 100 has traveled, storing a number of times the mobile device has traveled each of the routes or paths (route segments), and storing dates when the routes or paths (route segments) were traveled. This enables the mobile device to compute a route familiarity quotient based on the number of times a route or route segment was traveled and how long ago the route or route segment was traveled. Conceptually, the quotient may be determined by dividing the number of trips by the average age of the trips. Thus, for example, if the user made many recent trips, the quotient will be high. If a route was travelled frequently but many years ago, the route might no longer be familiar. The quotient (number of trips divided by average age) would thus be lower, suggesting decreased familiarity. Thus, the elapsed time since a given route was taken and the number of trips along that given route effectively provide a weighting (or quotient) that reflects the user's familiarity with that given route. This familiarity quotient is then compared to a predetermined threshold to determine whether the path is to be classified as familiar or unfamiliar. For example, a path may have been traveled ten times once a year for ten years. The average age of being five years, the quotient would be 2. The threshold for familiarity may be set at 5. This path would thus be classified as unfamiliar. As another example, assume a path was traveled three times an average of six months ago. The quotient would thus be 6, which is greater than the threshold of 5, thus indicating that the path should be classified as familiar. As will be appreciated, the mobile device may have different gradations of familiarity as opposed to a binary (familiar-unfamiliar) classification, for example, different levels of familiarity from very familiar to very unfamiliar. Also, the frequency of navigational notifications can in other implementations be made to vary proportionately to the familiarity quotient. It bears emphasis that the quotient is merely presented as one example of a simple mathematical way of evaluating familiarity. It will be appreciated that many other algorithms may be devised to quantify a user's familiarity with a given route.

In another implementation of this method, the determination as to whether the current route is a familiar path is accomplished by determining whether the mobile device is located in a familiar geographical area, e.g. a familiar neighbourhood, a familiar city, a familiar country, etc. In other words, the mobile device may make a quick assumption about the familiarity or unfamiliarity of a given route by simply determining the geographical entity in which the mobile device is currently situated. For example, if the mobile device 100 is currently situated in the user's home town or in a region associated with the mobile device's home area code, then the mobile device may surmise that the current route is likely to be a familiar path. If the mobile device is traveling in a geographical area that is foreign to the user, e.g. a foreign country, a distant city, etc., then the mobile device may presume that the current route is likely to be unfamiliar to the user. In a variant, the mobile device may increase the navigational notification frequency if the mobile device is traveling in a geographical region that has street signs in a language that is foreign to the user's language (i.e. the language setting on the mobile device or the language associated with the user's home region). Using the geographical entity as an indicator of familiarity may be used in addition to any learned travel patterns or in lieu thereof.

The foregoing method steps can be implemented in hardware, software, firmware or as any suitable combination thereof. That is, the computer-readable medium comprises instructions in code which when loaded into memory and executed on a processor of a mobile device is adapted to perform acts of defining a trusted group of mobile devices traveling to a common destination, obtaining traffic data from the mobile devices of the trusted group, and determining traffic information based on the traffic data for a plurality of routes to the common destination.

These method steps may be implemented as software, i.e. as coded instructions stored on a computer readable medium which performs the foregoing steps when the computer readable medium is loaded into memory and executed by the microprocessor of the mobile device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

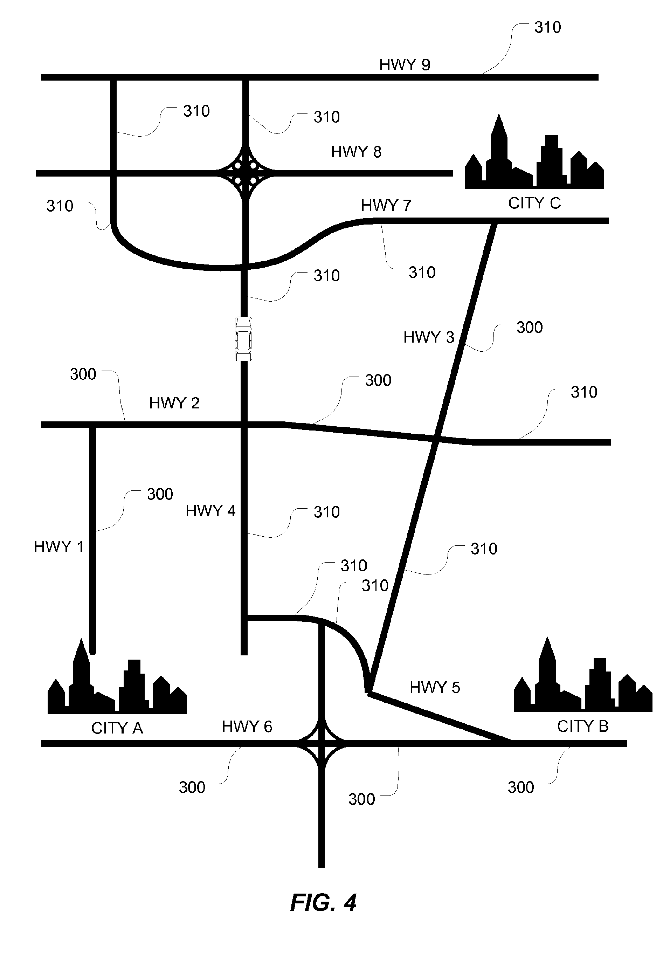

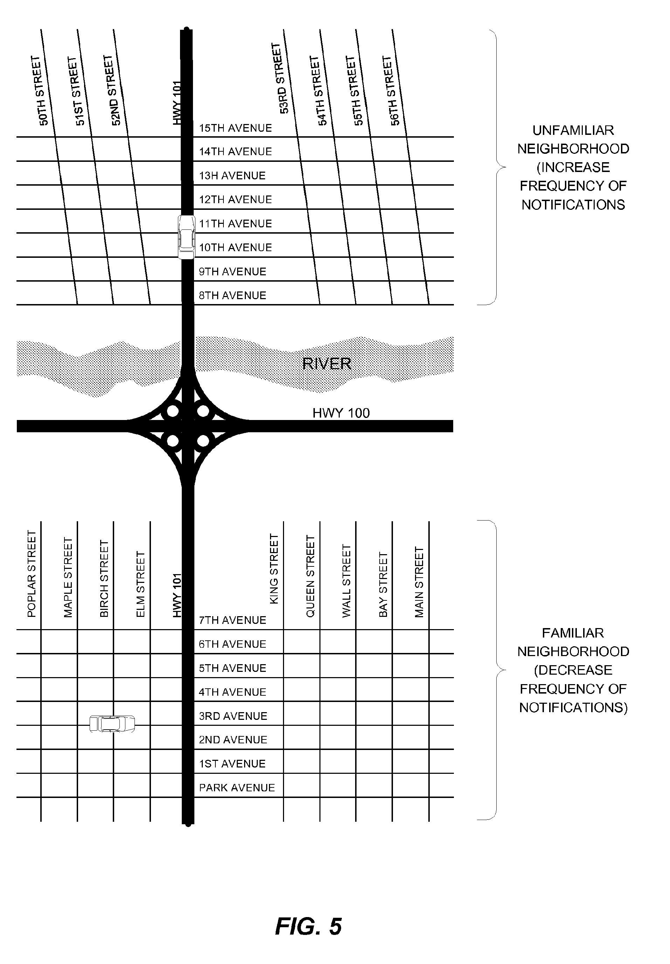

FIGS. 4 and 5 illustrate further examples of how this technology may be implemented to vary or adjust the frequency of navigational notifications based on the familiarity of a given path or geographical region.

FIG. 4 depicts an example of a road map in which each route from a starting point to a destination is divided or segmented into paths. In other words, a route is composed of one or more paths. These paths can be thought of as route segments. Each path is then classified as familiar (familiar paths 300) or as unfamiliar (unfamiliar paths 310). In other words, a user may only be familiar with certain paths (segments) along a route. In this example, the user commutes frequently between City A and City B. The user typically takes the direct route between City A and City B (along Highway 6). In a simple implementation, the route along Highway 6 is composed of only a single path (Highway 6). This path is designated as familiar (labelled as familiar path 300). In this sense, it can also be said that the entire route is familiar since all paths of the route are familiar.

In an alternative implementation, the route between City A and City B could be segmented into three segments (each segment defining a distinct path). In this case, each of the three paths along Highway 6 is labelled as a familiar path 300. The entire route can also be said to be a familiar route since all paths constituting the route are familiar.

The user also frequently commutes between City A and City C by taking Highway 1, Highway 2, and Highway 3. This route is segmented into its constituent paths (or route segments). In this example, each path along this route from City A to City C is designated as a familiar path 300.

For the sake of illustration, it is assumed that none of the other paths (or route segments) are familiar to the user. These are designated as unfamiliar paths 310.

Using the present technology, therefore, when the user travels along a path (or route segment) that is classified (designated) as a familiar path 300, the frequency of navigational notifications is automatically decreased. Conversely, when the user travels along a path (or route segment) that is classified (designated) as an unfamiliar path 310, the frequency of navigational notifications is automatically increased.

In the specific example depicted in FIG. 4, the car icon (representing by way of example a current location of the navigation-enabled mobile device) is traveling along a path of Highway 4 between Highway 2 and Highway 7. This path is classified as an unfamiliar path 310. Accordingly, the mobile device automatically increases the notification frequency to provide more frequent navigation instructions to the user of the mobile device. The *a priori* classification of paths as familiar or unfamiliar may be accomplished, as noted above, by learning travel patterns for the mobile device.

FIG. 5 depicts an example of how the familiarity of a given path may be inferred or deduced by referring to the neighbourhood, city, district or other geographical entity in which the mobile device is currently situated. Determining familiarity based on the user's general familiarity with a particular geographical entity or region obviates the need to collect travel data and determine travel patterns. In one example, which is presented in FIG. 5, a user may be familiar with one neighbourhood in a large city but unfamiliar with another neighbourhood in the same large city. A city map of a fictitious city is depicted in FIG. 5 for the purposes of illustrating this particular implementation.

In this example, the neighbourhood south of the river and highway is classified as familiar whereas the neighbourhood north of the river and highway is classified as unfamiliar. When the mobile device is located in the familiar neighbourhood, the mobile device infers or assumes that the user is probably familiar with the paths in that neighbourhood. The mobile device then automatically decreases the notification frequency. Conversely, when the mobile device is located in the unfamiliar neighbourhood, the mobile device infers or assumes that the user is probably unfamiliar with the paths in that neighbourhood. The mobile device then automatically increases the notification frequency.

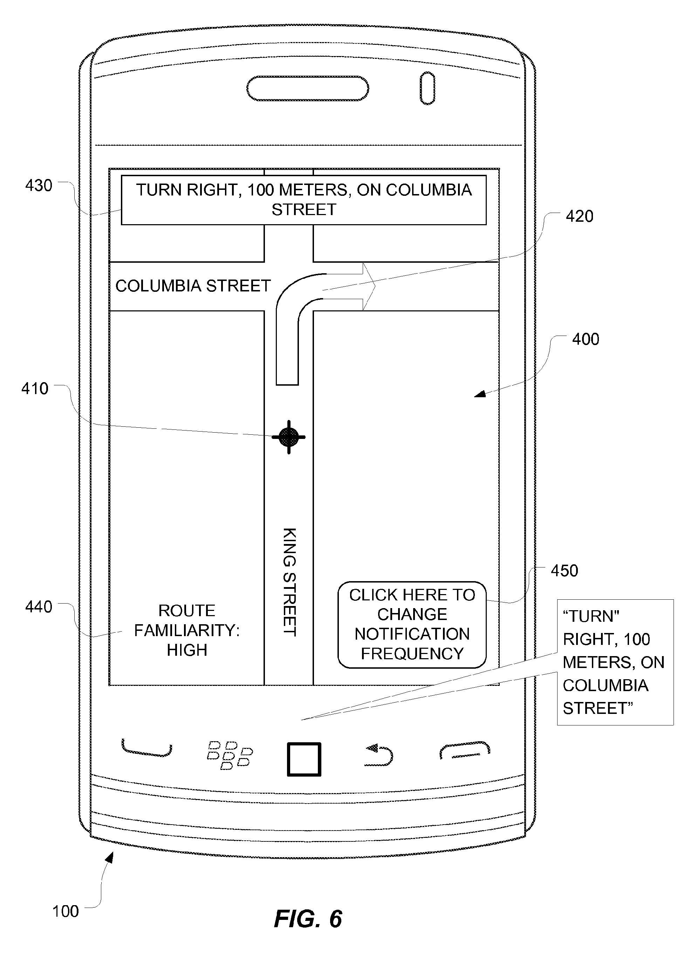

FIGS. 6 to 10 illustrate the operation of an exemplary mobile device 100 that is running a navigation application in accordance with implementations of the present technology. The user interface (or map interface) 400 is displayed onscreen in the conventional manner with street names and other map features labelled accordingly. The current location 410 may be shown using any suitable icon or graphical indicator. The navigation application may provide a visual navigational notification and/or an audible navigational notification and/or a vibratory navigational notification. An example of a visual notification is a turn arrow 420 (and/or a highlighted path) which may be depicted onscreen to visually indicate to the user where he should turn. Another example of a visual notification is a textual notification 430 providing written instructions to the user. The audible notification may be provided, for example, by a text-to-speech module that reads the written instructions aloud for the user to hear. Audible instructions are generally believed to reduce driver fatigue since they permit the driver to keep his eyes on the road while listening to the instructions. A vibratory navigational notification may be provided, for example, by triggering the vibration mode when the final turn notification is delivered.

Optionally, the user interface may provide a familiarity indicator 440 to indicate to the user whether the mobile device is currently configured to provide an increased or decreased frequency of navigational notifications. This may be useful to the user so that the user may manually override the automatic setting, as will be explained in greater detail below.

Optionally, the user interface may provide a user interface element 450 to manually change (or override) the frequency of the navigational notifications. For example, the mobile device may infer that the user is familiar with a given neighbourhood and thus decrease the navigational notifications. The user may wish to override this assumption if he is traveling along a path in that neighbourhood with which he is, in fact, unfamiliar. In a variant, the ability to override the automatically adjusted frequency of navigational notifications may be triggered and controlled by a voice command.

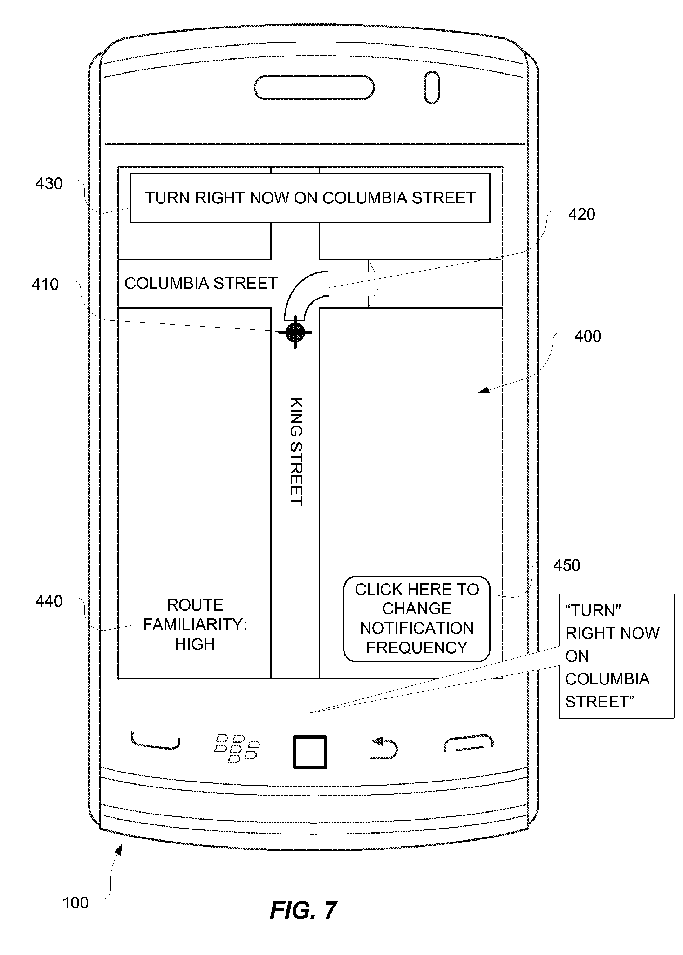

FIG. 6 and FIG. 7 illustrate the operation of the mobile device 100 when traveling along a familiar path. In this case, the mobile device decreases the navigational notifications and thus provides only minimal instructions to the user.

For example, as shown in FIG. 6, the mobile device may provide only one advance notification of an upcoming turn onto Columbia Street. In this particular example, this notification is provided 100 metres before the turn. It will be appreciated that this distance is strictly provided as an example, and the notification distances and/or times are a matter of design choice and thus may be varied.

FIG. 7 depicts, by way of example, the mobile device providing a final notification to make the turn.

Thus, when navigating along familiar paths (or when situated in familiar territory), the mobile device may for example provide only two audible instructions, one as advance warning and a second when the intersection has been reached.

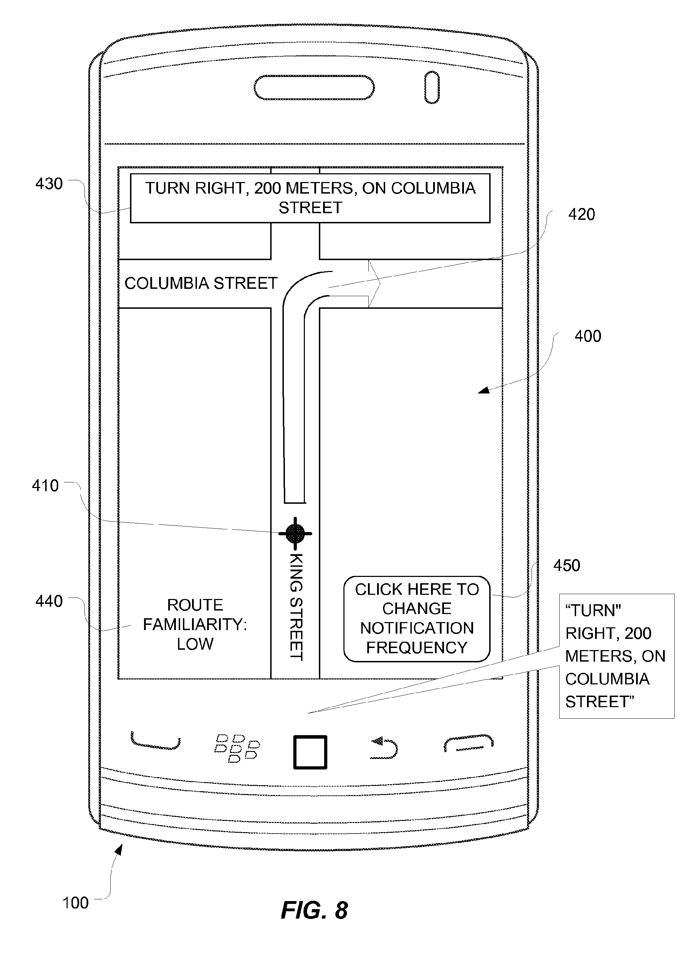

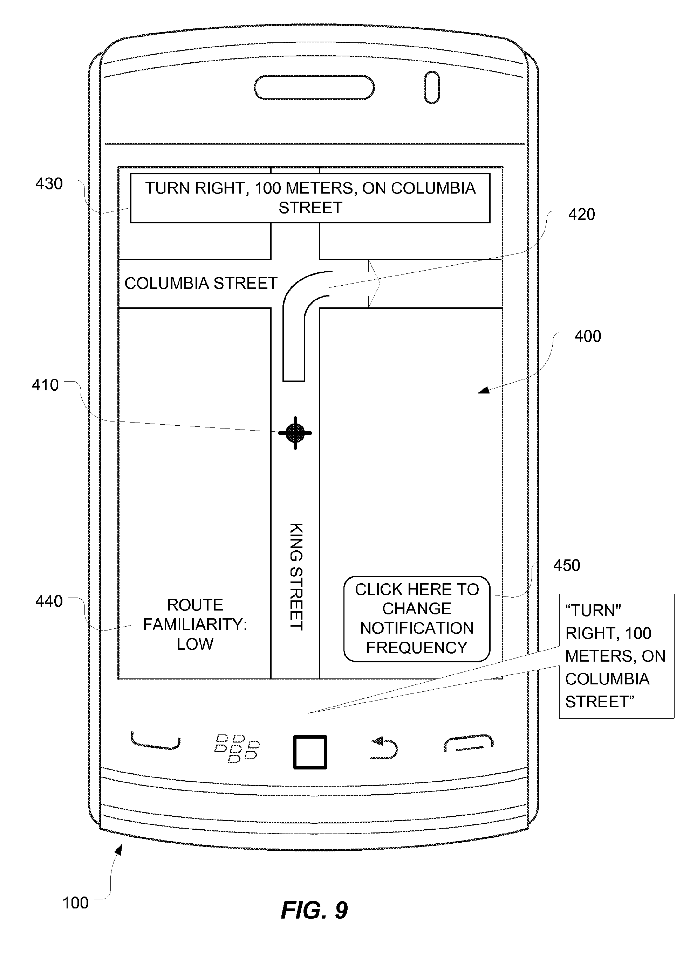

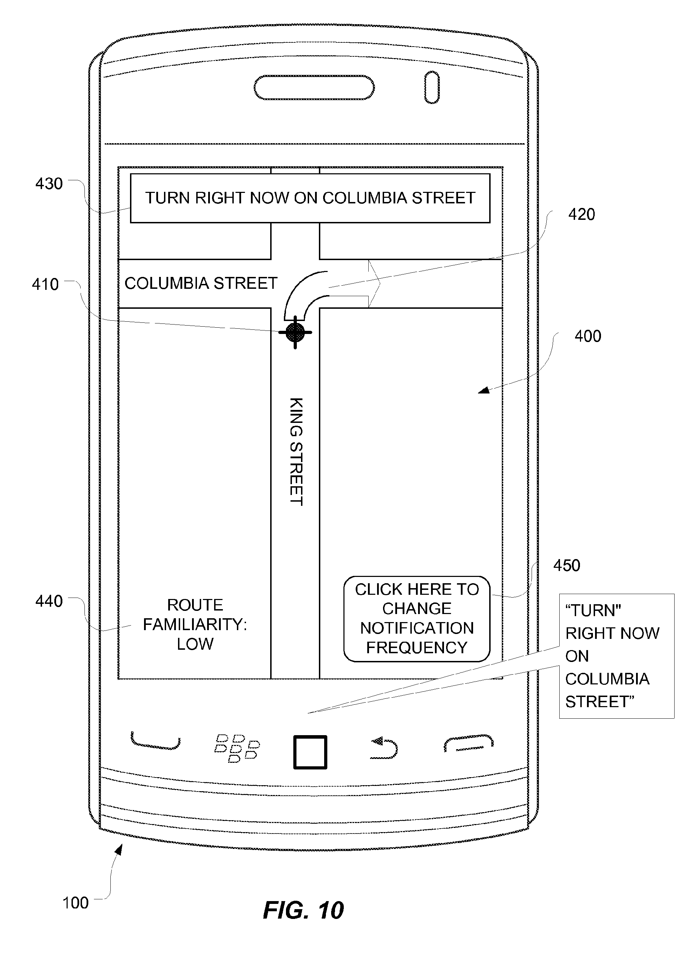

In contrast, as depicted in FIGS. 8-10, when navigating along unfamiliar paths or when situated in unfamiliar territory), the mobile device may for example provide only three (or more) audible instructions, e.g. multiple advance warnings and a final turn instruction when the intersection has been reached. For example, as shown in FIG. 8, a first advance warning may be provided at 200 metres to prepare the user for the upcoming turn with which he is unfamiliar. As shown by way of example in FIG. 9, a second advance warning may be provided at 100 metres. As shown by way of example in FIG. 10, a final instruction is provided when the intersection is reached. As will be appreciated, the precise number of navigational notifications and when (or where) they are delivered is a matter of design choice and thus may be varied.

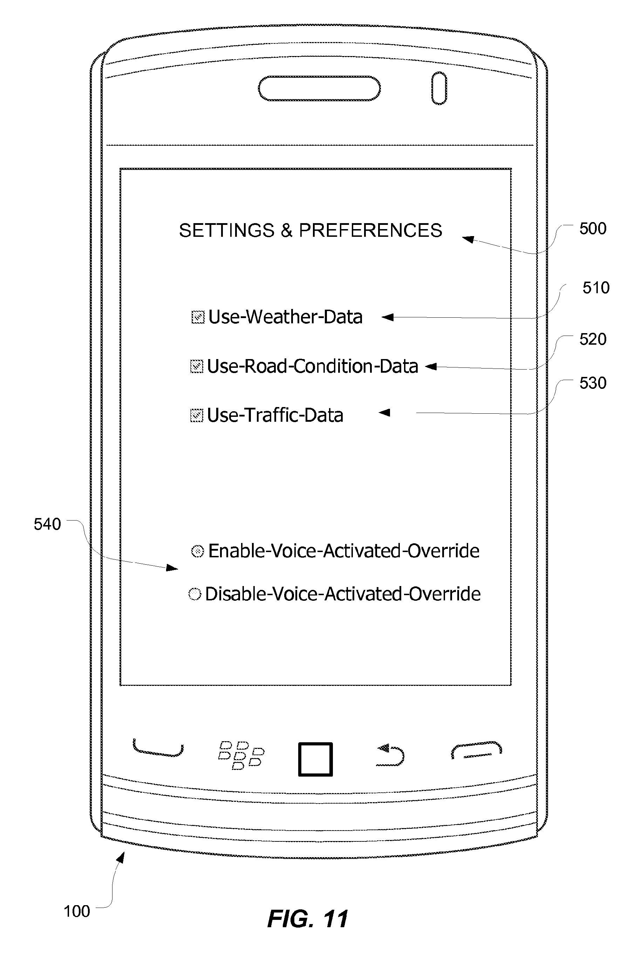

FIG. 11 depicts an example of a settings and preferences page 500 (or menu) in the navigation application that enables the user to configure the manner in which the frequency of navigational notifications is varied. For example, the settings and preferences page 500 may include a check box 510 for obtaining and/or using weather data to further adjust or refine the notification frequency. For example, the settings and preferences page 500 may also include a check box 520 for obtaining and/or using road condition data to further adjust or refine the notification frequency. For example, the settings and preferences page 500 may further include a check box 530 for obtaining and/or using traffic data to further adjust or refine the notification frequency.

The setting and preference page 500 may optionally include a toggle 540 for switching between a first mode of operation in which the mobile device permits a voice-activated override and a mode where it does not. In a voice-activated override mode, the user may speak voice commands to the mobile device to increase or decrease the frequency of the navigational notifications.

This new technology has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A method of providing navigational notifications, the method comprising:
identifying a current route;
identifying one or more paths within the current route;
determining whether the one or more paths are familiar or unfamiliar; and
determining a frequency of the navigational notifications for each path within the current route based on whether the one or more paths are familiar or unfamiliar.

2. The method as claimed in claim 1 wherein determining whether the one or more paths are familiar or unfamiliar comprises a prior step of learning travel patterns.

3. The method as claimed in claim 2 wherein learning travel patterns comprises:
storing a list of paths over which a mobile device has traveled;
storing a number of times the mobile device has traveled each of the paths;
storing dates when the paths were traveled;
computing a path familiarity quotient based on the number of times a path was traveled and how long ago the path was traveled; and
comparing the path familiarity quotient to a predetermined threshold to determine whether the path is to be classified as familiar.

4. The method as claimed in any one of claims 1 to 3 wherein determining whether the one or more paths are familiar or unfamiliar comprises determining whether the mobile device is located in a familiar geographical area.

5. The method as claimed in any one of claims 1 to 3 further comprising adjusting the frequency of the navigational notifications based on weather data.

6. The method as claimed in any one of claims 1 to 3 further comprising adjusting the frequency of the navigational notifications based on road condition data.

7. The method as claimed in any one of claims 1 to 3 further comprising adjusting the frequency of the navigational notifications based on traffic data.

8. A computer-readable medium comprising instructions in code which when loaded into memory and executed on a processor of a mobile device is adapted to perform the method of any one of claims 1 to 7.

9. A navigation-enabled mobile device comprising:
a memory operatively coupled to a processor for executing a navigation application;
a speaker operatively coupled to the processor for providing navigational notifications;
a position-determining system for determining a current location to enable the processor to identify a current route on which the mobile device is located and to identify one or more paths within the current route; and
wherein the processor is configured to:
determine whether the one or more paths are familiar or unfamiliar; and
determine a frequency of the navigational notifications for each path based on whether the one or more paths are familiar or unfamiliar.

10. The mobile device as claimed in claim 9 further comprising a radiofrequency transceiver for receiving weather data, wherein the processor is configured to adjust the frequency of the navigational notifications based on the weather data.

11. The mobile device as claimed in claim 9 further comprising a radiofrequency transceiver for receiving road condition data, wherein the processor is configured to adjust the frequency of the navigational notifications based on the road condition data.

12. The mobile device as claimed in claim 9 further comprising a radiofrequency transceiver for receiving traffic data, wherein the processor is configured to adjust the frequency of the navigational notifications based on the traffic data.

13. The mobile device as claimed in any one of claims 9 to 12 wherein the processor is configured to learn travel patterns.

14. The mobile device as claimed in claim 13 wherein the processor is configured to learn travel patterns by:
storing in the memory a list of paths over which the mobile device has traveled;
storing in the memory a number of times the mobile device has traveled each of the paths;
storing in the memory dates when the paths were traveled;
computing a path familiarity quotient based on the number of times a path was traveled and how long ago the path was traveled; and
comparing the path familiarity quotient to a predetermined threshold to determine whether the path is to be classified as familiar.
